# EUROPEAN PATENT APPLICATION

(11) **EP 1 630 486 A2**
(43) Date of publication of application: **01.03.2006**
(21) Application number: 05017486.1
(22) Date of filing: 11.08.2005
(51) Int. Cl.: F24F 13/14, B60H 1/00

(54) **Flap valve arrangement**

(30) Priority: 27.08.2004 GB 0419061
(71) Applicant: Delphi Technologies Inc., Troy, MI 48077 (US)
(72) Inventor: Dautry, Etienne, Hautcharage 4940 (LU)
(74) Representative: Jones, Keith William

(57) **Abstract**

The invention proposes a flap valve arrangement (10) comprising a valve flap (14) pivotally mounted in a passage (12), wherein said valve flap (14) is rotatable about an axis of rotation (20), wherein said valve flap (14) comprises at least one free end (22, 24), and wherein said passage (12) comprises at least one remote wall (30, 32) facing said at least one free end (22, 24) of the flap (14),
characterised in said at least one free end (22, 24) of the flap (14) is curved or curveable against the direction of a closing motion of the flap (14) and said at least one free end (22, 24) of the valve flap (14) is provided to engage the remote wall (30, 32) in a partially at least substantially straight section.

## Description

### Technical Field

The present invention relates to a flap valve arrangement comprising a valve flap for controlling the flow of air or other gases (mass flow) through a passage.

### Background of the Invention

It is known to provide a single valve flap in a mass flow passage for controlling the mass flow, preferably air flow, through the passage. The valve flap is pivotally mounted for rotation about an axis. The valve flap may be flat or curved. As an alternative, multiple valve flaps may be positioned to extend across the passage. The multiple valve flaps are pivotally mounted and rotatable in unison. Disadvantages are known with such arrangements in terms of noise, especially when the valve flap or flaps are in an almost closed position.

FR 2757609, disclosing an air flow regulator having a pivoted flap formed by a rigid flap and a sealing joint of elastic material with a base covering an edge strip of one of at least two opposing faces of the plate, aims at alleviating noise normally occurring when moving the flap into engagement with the corresponding flap seats. To this end, a flexible sealing lip extends from the base as an extension of the plate. The flexible lip can have an end with a curved surface which comes into abutment with a fixed wall extending parallel to the plate to define an end position for the flap. The fixed wall, i.e. the flap seat, has a curved surface coupled with that of the end of the flexible lip.

### Summary of the Invention

It is an object of the present invention to provide a further embodiment of a flap valve arrangement and more particularly, to provide a flap valve arrangement which reduces noise occurring from mass flow, such as air flow, passing the valve arrangement.

This object is achieved by means of a flap valve arrangement as defined in claim 1. The flap valve arrangement comprises a valve flap - or simply a flap - pivotally mounted in a passage, wherein the valve flap is rotatable about an axis of rotation, wherein the valve flap comprises at least one free end, and wherein the passage comprises at least one remote wall facing said at least one free end of the flap. According to the invention, the above flap valve arrangement is characterised in that said at least one free end of the flap is curved or curvable against the direction of a closing motion of the flap and in that said at least one free end of the valve flap is provided for engaging the remote wall in a partially at least substantially straight section. When the flap end is defined as being curvable, curvable is to be understood in the sense of bendable or flexible.

The curved flap end contributes in twofold to the above identified object of the invention. Firstly, the contour provides for smooth passage of the mass or air flow, specifically when the flap is close to the closed position. This is essentially due to the curved contour of the flap end reducing substantially the air pressure drop and the turbulent kinetic energy where in prior art solutions flap ends with a sharp edge usually lead to air pressure drop and turbulences which provide for audible noise. Secondly, the contour provides for a tight fit with the remote wall. A sharp ended flap could only engage the remote wall if the flap's dimension exactly meets the passage's diameter. With the curved end the flap's dimension is effectively a little larger as opposed to the passage's diameter. Thus the flap is always, regardless of production tolerances, etc., capable of closing the passage and thus always capable of functioning as a valve flap.

Preferably, the flap has a curved or curvable free end on both sides of the axis of rotation. And further preferably, the axis of rotation is in the middle or at least essentially in the middle of said flap or in the middle between the two curved ends. A flap valve arrangement with an axis of rotation positioned as defined above which, with respect to the passage would be located in the centre or essentially at the centre of the passage, would allow the flap to revolve as opposed to pivot or rotate flaps.

If the or each free end of the flap, at least in a segment provided for engaging the remote wall, is covered with an elastic or compressible layer, preferably a foam layer or a rubber layer, the elastic layer provides for avoidance of an audible closure sound (when the flap engages the passage wall) and furthermore provides for further reduction of airborne noise. With an elastic layer in the form of a foam layer, more particularly a PU (poly urethane) and/or PE (poly ethylene) layer with a thickness of around 2 to 6 millimetres, the foam usually comprises an "open" or "semi-open" or "close" or structured surface and as thus partially absorbs the high turbulences and helps to further reduce the airborne noise level.

According to a preferred embodiment, the flap valve arrangement is characterised in said valve flap comprises said at least one free end and two opposed sides, the passage comprising said at least one remote wall facing said at least one free end of the flap and two side walls facing said opposed sides of the flap, wherein at least one of said two side walls comprises a flap seat provided for being engaged by one of said opposed sides of the flap once the valve is closed. Thus, with the valve in a closed position, the passage is even better sealed as opposed to a flap engaging one passage wall only. Closure of the valve therefore is effected, according to the preferred embodiment of the flap valve arrangement, by means of the curved/profiled flap ends engaging the remote wall and furthermore by means of the or each flap sides engaging the or each flap seat.

In a preferred embodiment, where the valve flap comprises an essentially rigid centre portion with the axis of rotation passing through the rigid centre portion, the rigid body allows the valve flap to maintain, or at least essentially maintain, its shape when exposed to a mass or air flow passing through the passage.

If the rigid portion is curved in an S-shape style the resulting outer contour of the flap provides for the mass or air flow stream to be guided by the flap shape from e.g. a distribution box of a HVAC module (HVAC = heat, ventilation and air conditioning) to the ductwork of a vehicle. Such guidance of the air flow stream results in reducing the airborne noise to a minimum level.

If the curvature of an active surface of the rigid portion on each side of the axis of rotation continues into the curvature of the relevant free end of the flap, the active surface is free of edges or the like. "Active surface" here is to be understood as referring to the surface provided to engage the passage wall and/or the or each flap seat or the surface exposed to the mass flow or the surface facing upstream of the massflow.

The absence of edges provides for a smooth and unperturbed flow stream passing over the active surface. Preferably the active surface is fully covered or fully composed with an elastic or compressible layer, such as foam or rubber. The active surface, or more preferably both surfaces of the valve flap, being free of edges and/or fully covered or fully composed with such a layer, provides for further reduction of airborne noise due to the avoidance of turbulence and/or the specific acoustic characteristics of the covering layer as herein before described in connection with the open or structured surface of a foam layer.

Preferably, the or each flap seat comprises a curved bearing face, where the curvature of said bearing face corresponds to the curvature of the free end and/or at least part of the rigid portion of the valve flap. Flap seats thus shaped allow for a tight fit of the valve flap once the valve is closed.

Preferably, the or each flap seat is aerodynamically shaped in that the contour of the flap seat downstream or upstream of a mass or air flow through the passage continues into the contour of the relevant side wall of the passage. Flap seats thus shaped, i.e. adapted to the contour of the wall facing the curved end of the flap, provide for a smooth inner contour of the passage. Smooth passage contour in turn avoids sudden changes in the diameter of the passage and therefore reduces substantially the air pressure drop and the turbulent kinetic energy which otherwise would result in expansion or compression of the mass or air flow and therefore lead to undesired airborne noise.

### Brief Description of the Drawings

Other features and advantages of the present invention will appear from the following description of a preferred embodiment of the invention, given as a non-limiting example, illustrated in the drawings. All the elements which are not required for the immediate understanding of the invention are omitted. In the drawings, the same elements are provided with the same reference numerals in the various figures, and in which:
- Fig. 1: is a cross-sectional view of a flap valve arrangement in accordance with the present invention, when the flap valve is in the fully closed position;
- Fig. 2: is a cross-sectional view of the flap valve arrangement of Fig. 1, when the flap valve is in the almost closed position;
- Fig. 3: is a cross-sectional view of the flap valve arrangement of Fig. 1, when the flap valve is in the fully open position;
- Fig. 4, Fig. 5: are cross-sectional views of a side wall of the passage comprising the flap valve arrangement in order to show the profile of two flap seat integrally formed in the relevant side wall;
- Fig. 6: is a cross section through two passage walls showing the position and the shape of the relevant flap seat disposed on the side wall 36; and
- Fig. 7, Fig. 8: are views into the passage from a position upstream or downstream of the flap valve.

### Description of the Preferred Embodiment

In the following description, for purposes of explanation and not limitation, specific details are set forth, such as particular embodiments, in order to provide a thorough understanding of the present invention. However, it will be apparent to one skilled in the art that the present invention may be practised in other embodiments that depart from these specific details. In other instances, detailed descriptions of well-known devices and methods are omitted so as not to obscure the description of the present invention with unnecessary detail.

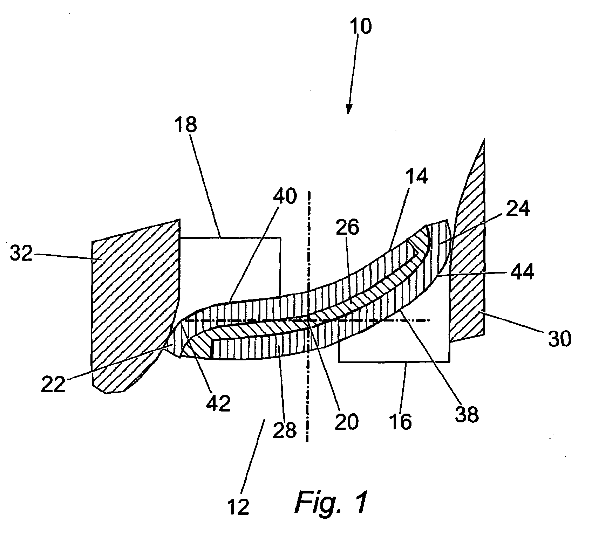

Referring to the drawings, a flap valve arrangement 10 in accordance with the present invention comprises an air flow passage 12, a valve flap 14, and a pair of flap seats 16, 18 positioned in the passage 12 and engagable by the valve flap 14. The valve flap 14 is pivotally mounted in the passage 12 and is rotatable about an axis 20. The valve flap 14 comprises free ends 22, 24 facing away from the axis 20 and a substantially rigid portion 26 with an elastic layer, e.g. an outer foam layer 28, extending along the opposed sides of the rigid portion 26. The rigid portion 26 has a curved (profiled) cross-section. In the embodiment of Fig. 1 the curved profile is essentially S-shaped. However, the rigid portion, or at least a central portion, could also be straight.

The free ends 22, 24 are provided for engaging a wall 30, 32 of the passage 12. The passage 12 in the embodiment of Fig. 1 has four side walls 30, 32, two of which are visible in the cross section view. In order to distinguish the visible walls 30, 32 from the side walls invisible in the section view, the visible walls 30, 32 will be referred to as remote walls 30, 32 on account of the flap ends 22, 24 engaging these remote side walls 30, 32 once the valve 10 is closed. The remaining walls 34, 36 are simply denoted as side walls 34, 36.

The flap seats 16, 18 are secured to said side walls 34, 36 (not shown in the cross section) of the passage 12. The flap seats 16, 18 each have a profiled engagement surface 38, 40 respectively which substantially corresponds to the profile of the portion at the outer circumference of the valve flap 14 which engages the flap seat 16, 18.

The valve flap 14 may be rotated by any suitable means, such by use of bearings and levers (not shown), or by mounting on a valve shaft (not shown).

Preferably, on the input side of the valve flap 14, a radial outer extremity 42 of the profiled surface 40 of the flap seat 18 is substantially aligned with the axis 20. On the output side of the valve flap 14, a radial outer extremity 44 of the profiled surface 38 of the flap seat 16 is located at a position which is spaced (in the longitudinal direction) from the axis 20 by a predetermined distance X. Alternatively, the extremities 42, 44 may be aligned, and aligned with axis 20.

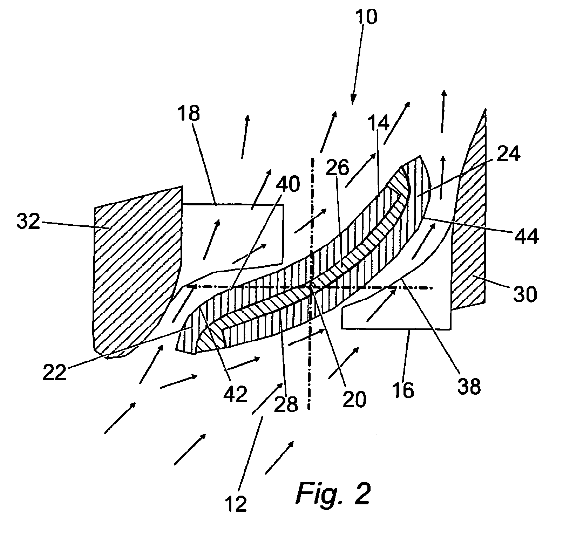

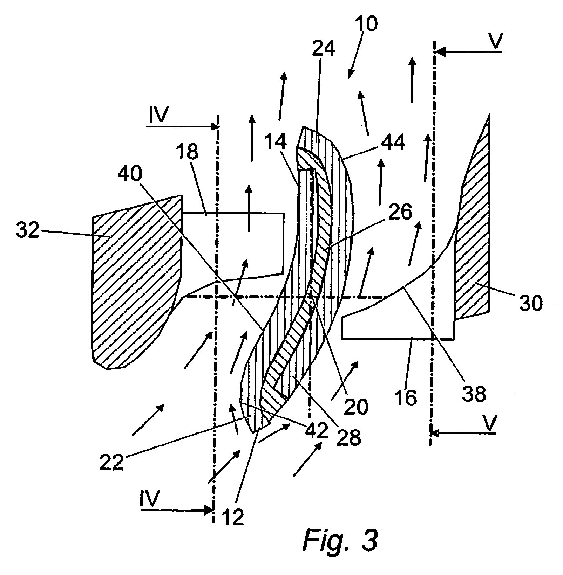

In the fully closed position of the valve flap 14 (Fig. 1), the outer foam layer 28 on the valve flap 14 engages the remote wall 30, 32 and the profiled surface 38, 40 on the adjacent flap seat 16, 18. In the almost closed position of the valve flap 14 (Fig. 2), air can pass alongside the valve flap 14 and because of the profile of the valve flap 14 minimal noise is generated. In the fully open position of the valve flap 14 (Fig. 3), the valve flap 14 still functions as a guide for directing the air flow with minimal noise generation.

Although the above arrangement illustrates a valve flap 14 with foam on the whole of both sides, it will be appreciated that the foam or any elastic layer is only required in the portions of the valve flap 14 which engages the remote wall 30, 32 and/or the flap seats 16, 18.

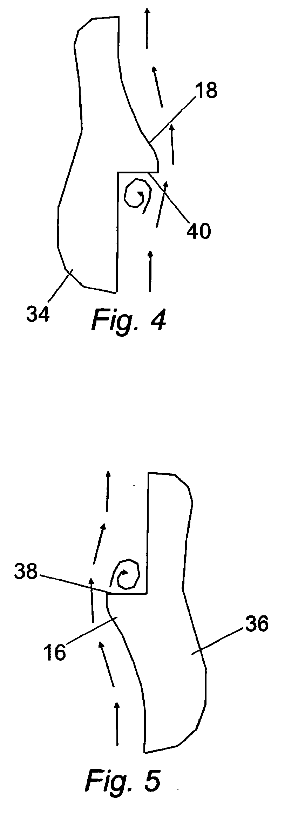

The present invention has particular application in a heating ventilation and air conditioning (HVAC) module, for example, as shown in Fig. 4.

For every flap valve position, the air flows around the profiled valve flap 14. Additionally the flow separation is reduced and delayed due to the outer circumferential end-shape of the valve flap 14. Thus the noise generated by the flow of air is reduced. In addition, the flap seats 16, 18 are shaped in a manner to ensure good sealing fitting the particular shape of the optimised valve flap 14. The valve flap 14 can be covered with softer material such as foam or over-moulded in order to ensure sufficient sealing and further noise absorption. The shape of the flap valve and flap seat arrangement depends on airflow pattern in the module and in the considered outlet.

Fig. 4 is a cross section along section line IV-IV in Fig. 3 showing one of the side walls 34 invisible in the cross section in Fig. 3. From the cross section it is apparent that the flap seat 18 is formed as an integral part of the side wall 34. The engagement or bearing surface 40 of the flap seat 18 is essentially flat. Furthermore, the flap seat 18 is shaped in that downstream of the engagement surface 40 the contour of the flap seat 18 continues into the contour of the side wall 34 of the passage 12.

Fig. 5 is a cross section along section line V-V in Fig. 3 showing one of the side walls 36 invisible in the cross section in Fig. 3. From the cross section it is apparent that the flap seat 16 is formed as an integral part of the side wall 36. The engagement or bearing surface 38 of the flap seat 16 is essentially flat. Furthermore, the flap seat 16 is shaped in that upstream of the engagement surface 38 the contour of the flap seat 16 continues into the contour of the side wall 36 of the passage 12.

The pointed circle in Fig. 4 and Fig. 5 is meant to indicate inevitable turbulences of the mass flow through the passage 12 on account of the passage diameter abruptly changing at the height of the engagement surface 38, 40. However, on account of the flap seat 16, 18 upstream or downstream of the engagement surface 38, 40 shaped to smoothly continue into the contour of the passage 12 turbulences are reduced to a minimum.

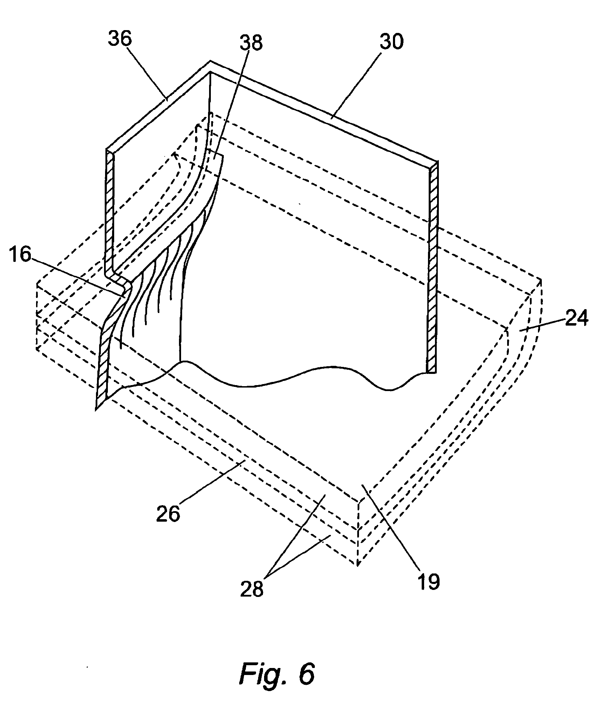

Fig. 6 is a cross section through two walls 30, 36, i.e. one remote wall 30 and one side wall 36, showing the position and the shape of the relevant flap seat 16 disposed on the side wall 36. The valve flap 14 with its rigid portion 26 and its elastic layer 28 is shown in dashed lines so as not to obscure the visibility of the flap seat 16. The valve flap 14 is shown in the closed position where the relevant remote end 24 can be seen as engaging the remote wall 30.

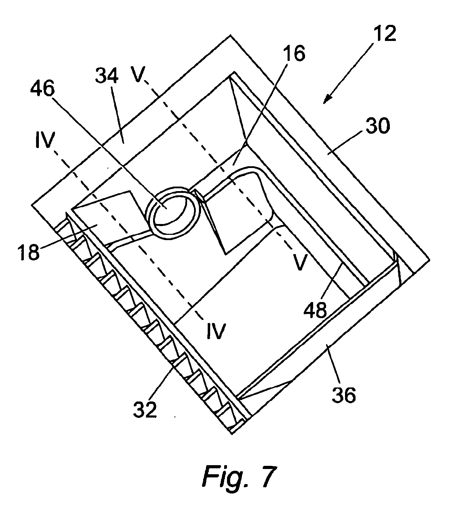

Fig. 7 is a view inside the passage 12 from a position downstream of the valve flap 14 (not shown in Fig. 7). As can be seen in Fig. 7 side wall 34 comprises a bore 46 for supporting the axis 20. Flap seats 16, 18 extend to the left and right-hand side of the bore 46. The remote wall 30 can be seen as comprising a ledge 48 as a means for further supporting the relevant curved free end 24 of the valve flap 14 when engaging the remote wall.

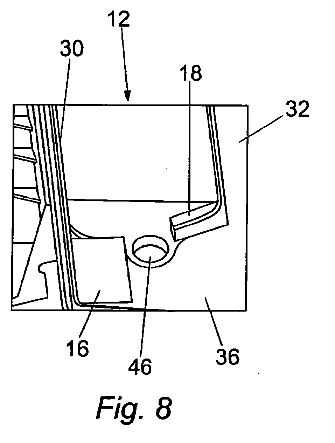

Fig. 8 is a view into the passage 12 from a position downstream of the valve flap 14 (not shown).

Although a preferred embodiment of the invention has been illustrated and described herein, it is recognised that changes and variations may be made without departing from the invention as set forth in the claims. More specifically, while the particular flap valve arrangement as herein shown and described in detail is fully capable of attaining the above-described objects of the invention, it is to be understood that it is the presently preferred embodiment of the invention and thus is representative of the subject matter which is broadly contemplated by the present invention. However, the scope of the present invention fully encompasses other embodiments which may become obvious to those skilled in the art. Accordingly, the scope of the present invention is to be limited by nothing other than the appended claims, in which, for example, reference to an element in the singular is not intended to mean "one and only one" unless explicitly so stated, but rather "one or more". All structural and functional equivalents to the elements of the above-described preferred embodiment that are known, or later come to be known, to those of ordinary skill in the art are expressly incorporated herein by reference and are intended to be encompassed by the present claims. Moreover, it is not necessary for a device or method to address each and every problem sought to be solved by the present invention, in order to be regarded as being encompassed by the present claims.

### List of reference numerals

- 10: flap valve arrangement
- 12: air flow passage/passage
- 14: valve flap
- 16: flap seat
- 18: flap seat
- 20: axis
- 22: free end (of the valve flap)
- 24: free end (of the valve flap)
- 26: rigid portion (of the valve flap)
- 28: foam layer (of the valve flap)
- 30: remote wall
- 32: remote wall
- 34: side wall
- 36: side wall
- 38: engagement surface (of the flap seat)
- 40: engagement surface (of the flap seat)
- 42: radial outer extremity (of the flap seat)
- 44: radial outer extremity (of the flap seat)
- 46: bore
- 48: ledge

## Claims

1. A flap valve arrangement (10) comprising a valve flap (14) pivotally mounted in a passage (12),
said valve flap (14) being rotatable about an axis of rotation (20),
said valve flap (14) comprising at least one free end (22, 24),
said passage (12) comprising at least one remote wall (30, 32) facing said at least one free end (22, 24) of the flap (14),
**characterised in**
said at least one free end (22, 24) of the flap (14) being curved or curveable against the direction of a closing motion of the flap (14).
said at least one free end (22, 24) of the valve flap (14) being provided to engage the remote wall (30, 32) in a partially at least substantially straight section.

2. The flap valve arrangement of claim 1, having a curved or curveable free end (22, 24) on both sides of the axis of rotation (20).

3. The flap valve arrangement of claim 1 or claim 2, wherein
the or each free end (22, 24) of the flap (14), at least in a segment provided for engaging the remote wall (30, 32), is either covered with an elastic layer or fully composed by an elastic layer (6).

4. The flap valve arrangement of claim 3, wherein
the elastic layer (6) is a foam layer or a rubber layer.

5. The flap valve arrangement of any one of the preceding claims, wherein
said valve flap (14) comprising said at least one free end (22, 24) and two opposed sides,
said passage (12) comprising said at least one remote wall (30, 32) facing said at least one free end (22, 24) of the flap (14) and two side walls (34, 36) facing said opposed sides of the flap (14),
at least one of said two side walls (34, 36) comprising a flap seat (16, 18) provided for being engaged by one of said opposed sides of the flap (14) once the valve is closed.

6. The flap valve arrangement of any one of the preceding claims, wherein the valve flap (14) comprises an essentially rigid centre portion (5) with the axis of rotation passing through the rigid centre portion (5).

7. The flap valve arrangement of claim 6, wherein
the rigid portion (5) is curved in S-shape style.

8. The flap valve arrangement of claim 7, wherein the curvature of an active surface of the rigid portion (5) on each side of the axis of rotation continues into the curvature of the relevant free end (22, 24) of the flap (14).

9. The flap valve arrangement of claim 7 or claim 8, wherein the or each flap seat (16, 18) comprises a curved bearing face (38, 40) where the curvature of said bearing face (38, 40) corresponds to the curvature of the free end (22, 24) and/or at least part of the rigid portion (5).

10. The flap valve arrangement of claim 9, wherein
said bearing face (38, 40) is essentially flat and wherein the flap seat (16, 18) downstream or upstream of a mass flow through the passage (12) continues into the contour of the relevant side wall (34, 36) of the passage (12).
